# FASCICULE DE BREVET EUROPEEN

(11) **EP 1 815 099 B1**
(45) Date de publication et mention de la délivrance du brevet: **22.05.2013**
(21) Numéro de dépôt: 05819169.3
(22) Date de dépôt: 16.11.2005
(51) Int. Cl.: E06B 3/54, B60J 10/02, B60J 1/02, B60J 1/18

(54) **VÉHICULE COMPRENANT UNE VITRE COLLÉE A LA CARROSSERIE**
EINE MIT DER KAROSSIERIE VERKLEBTE SCHEIBE UMFASSENDES FAHRZEUG
VEHICLE COMPRISING A PANE BONDED TO THE BODYWORK

(30) Priorité: 16.11.2004 FR 0412121
(43) Date de publication de la demande: 08.08.2007
(73) Titulaire: Renault s.a.s., 92100 Boulogne Billancourt (FR); S.A. Artec Aerospace, 31840 Seilh (FR)
(72) Inventeur: BAROGGI, Jean-Louis, F-91940 Les Ulis (FR); CAPDEPUY, Marc, F-31840 Seilh (FR); DORNEZ, Régis, F-78180 Montigny Le Bretonneux (FR); MIRO, Laurent, F-31840 Seilh (FR); VERDUN, Philippe, F-31840 Seilh (FR); ZHANG, Charles, F-78280 Guyancourt (FR)
(74) Mandataire: Casalonga
(86) Numéro de dépôt international: PCT/FR2005/050955
(87) Numéro de publication internationale: WO 2006/054020

(56) Documents cités:
- CA-C- 2 008 787
- DE-A1- 3 501 916
- US-A- 4 857 376
- US-A- 5 593 784
- US-A1- 2001 047 058
- US-A1- 2004 035 066
- PATENT ABSTRACTS OF JAPAN vol. 2003, no. 12, 5 décembre 2003 (2003-12-05) & JP 2004 299572 A (NISSAN DIESEL MOTOR CO LTD), 28 octobre 2004 (2004-10-28)

## Description

L'invention concerne les véhicules comprenant au moins une vitre et une carrosserie.

Sous l'effet des excitations générées par le moteur et du contact des pneus avec la chaussée, le pare-brise et la lunette arrière d'une voiture peuvent devenir des émetteurs de bruit importants en dessous d'une fréquence de 800 Hz. De façon générale, lorsqu'un pare-brise est mis en vibration par ses supports mécaniques ou par une onde acoustique incidente, il génère des ondes de pression qui se transmettent à travers l'habitacle au détriment du confort des passagers.

Afin d'améliorer la prestation acoustique des voitures, la réduction du niveau vibratoire de ces deux panneaux, entre autres, est le sujet de beaucoup d'études. Actuellement, deux types de solutions sont retenus.

La première consiste à renforcer la structure de la caisse pour diminuer la propagation de l'énergie vibratoire vers ces panneaux. L'efficacité de cette solution est limitée par des contraintes d'architecture. Cette solution conduit également à l'augmentation du poids et du coût de la caisse.

Une autre solution consiste en un matériau amortissant de type poly-vinyle-butiral (PVB). En effet, on connaît aujourd'hui des pare-brises réalisés dans ce matériau développé pour déplacer la température de transition vitreuse vers 15°C. Avec cette caractéristique, le pare-brise a un facteur d'amortissement important à la température ambiante. En revanche, cette solution présente deux inconvénients. D'une part, son effet d'atténuation à la vibration devient seulement significatif après 150 Hz car en dessous de cette fréquence la déformation du pare-brise ne permet pas de travailler davantage le PVB. D'autre part, elle représente un surcoût important (plus de 10 €) par rapport à un pare-brise classique.

On connaît par ailleurs du document US 2001/0047058 un article multicouches de collage d'une vitre sur une carrosserie d'un véhicule automobile, dont une des couches est réalisée dans un matériau viscoélastique et dont une autre des couches forme une couche de colle.

Un but de l'invention est d'améliorer le confort des occupants du véhicule.

En vue de la réalisation de ce but, on prévoit selon l'invention un véhicule selon les caractéristiques de la revendication 1.

Ainsi, lorsqu'une onde incidente ou une excitation génère une vibration du pare-brise, cette vibration se transmet au matériau visco-élastique qui transforme une partie de cette onde en énergie mécanique de déformation et en énergie thermique. La vibration du pare-brise se trouve donc grandement atténuée, ce qui améliore le confort des passagers.

Le véhicule selon l'invention pourra présenter en outre au moins l'une quelconque des caractéristiques énumérées dans les revendications 2 à 8.

On prévoit également selon l'invention un procédé de fixation selon la revendication 9.

D'autres caractéristiques et avantages de l'invention apparaîtront encore à la lecture suivante de plusieurs modes de réalisation donnés à titre d'exemples non limitatifs en référence aux dessins annexés sur lesquels :
- la figure 1 est une vue en plan d'un véhicule selon un premier mode de réalisation de l'invention, au niveau du pare-brise et de sa fixation à la carrosserie ;
- la figure 2 est une vue en coupe du véhicule de la figure 1 suivant le plan II-II ;
- les figures 3 et 4 sont des vues analogues à la figure 1 illustrant d'autres modes de réalisation ;
- les figures 5 à 8 sont des vues analogues à la figure 2 illustrant d'autres modes de réalisation ;
- la figure 9 est une vue analogue à la figure 1 illustrant un autre mode de réalisation ;
- les figures 10 à 12 sont des vues en coupe du véhicule de la figure 9 suivant les plans X-X à XII-XII respectifs ;
- les figures 13 et 14 sont des vues analogues à la figure 2 illustrant d'autres modes de réalisation ;
- la figure 15 est une vue en plan du mode de réalisation illustré à la figure 14 qui constitue une coupe suivant le plan XIV-XIV de l'agencement de la figure 15 ;
- la figure 16 est une vue en coupe du mode de réalisation de la figure 15 suivant le plan XVI.XVI ; et
- les figures 17 à 19 illustrent d'autres modes de réalisation.

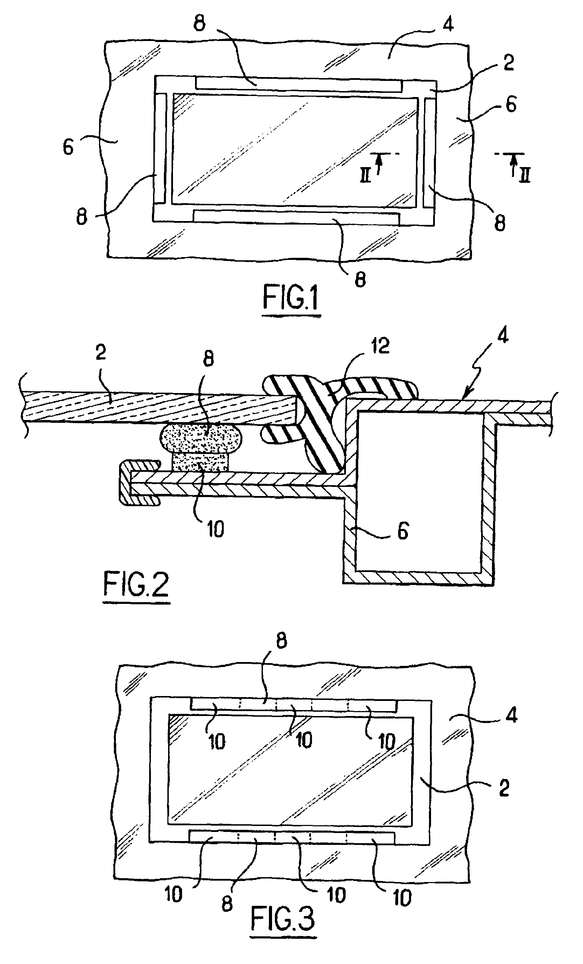

On a illustré aux figures 1 et 2 un premier mode de réalisation du véhicule selon l'invention. Le véhicule comprend plusieurs vitres parmi lesquelles un pare-brise 2. On va décrire l'invention en relation avec le pare-brise dans les modes de réalisation ci-dessous. Néanmoins, il est bien entendu que l'invention pourra être mise en oeuvre avec d'autres vitres telle que la lunette arrière.

Le véhicule comprend une carrosserie 4 comprenant notamment deux montants 6 en métal ou en matière plastique auxquels est fixé le pare-brise 2. A cette fin, on prévoit une couche de colle standard 8 telle qu'un adhésif, dénommé HV3 et vendu sous la marque GURITE, qui assure de façon classique le collage du pare-brise sur la caisse. La section transversale de la couche 8 a par exemple une épaisseur de 4 mm et une largeur de 6 mm et son module élastique est compris entre 30 et 50 Mpa.

L'agencement comprend également une couche d'un matériau élastique ou visco-élastique 10. Cette couche a en l'espèce une épaisseur de 1 à 2 mm. Par matériau visco-élastique, on entend un matériau dont le module élastique est compris entre 1 et 3 MPa et dont le facteur de perte est supérieur à 0,7, par exemple de l'ordre de 10. On pourra choisir un matériau tel que le butil. Les couches 8 et 10 sont ici superposées et forment avec le pare-brise 2 et les deux couches de tôle formant la carrosserie un empilement de cinq couches comme illustré à la figure 2. Précisément, la face supérieure de la couche de colle 8 s'étend en contact avec la face inférieure du pare-brise 2. La face inférieure de la couche de colle 8 s'étend en contact avec la face supérieure de la couche 10 de matériau visco-élastique. Cette dernière s'étend en contact par sa face inférieure avec la carrosserie 4. On prévoit un joint d'étanchéité 12 à lèvres recouvrant d'une part le chant du pare-brise 2 qui, sinon, s'étendrait en regard de la carrosserie, et d'autre part l'arête du montant de pare-brise.

Comme on le voit sur la figure 1, l'assemblage formé par la superposition des deux couches forme quatre portions correspondant respectivement aux quatre côtés du périmètre du pare-brise 2. Pour chaque côté, la portion correspondante s'étend continûment sur une plus grande partie de ce côté, dans sa zone médiane.

Dans cet agencement, la colle 8 assure le collage du pare-brise sur la caisse tandis que la couche de matériau visco-élastique 10 permet de dissiper l'énergie transmise entre la caisse et le pare-brise. Afin de dissiper le maximum d'énergie, le rapport des modules élastiques entre la colle et le matériau visco-élastique sera de préférence supérieur à 5. Dans les modes de réalisation décrits, c'est le facteur de perte en cisaillement qui est à considérer. Cet écart de raideur permet de transmettre l'énergie vers la couche du matériau visco-élastique et de faire travailler ce dernier notamment en cisaillement. Un autre facteur susceptible d'être important est la discontinuité de la disposition du matériau visco-élastique sur le pourtour du pare-brise, dans la mesure où les portions précitées ne sont pas en contact les unes avec les autres. En effet, cette discontinuité peut créer artificiellement des déformations locales qui amplifient l'effet de dissipation du matériau.

On pourra accentuer cet effet en prévoyant en variante comme sur la figure 3 dans laquelle chaque portion est constituée par une couche continue de colle 8 recouvrant des tronçons discontinus de couche de matériau visco-élastique. La couche de matériau visco-élastique 10 est donc cette fois discontinue. Dans le mode de réalisation de la figure 3, le pare-brise 2 est fixé à la carrosserie seulement par ses côtés longitudinaux supérieur et inférieur au moyen de cet agencement.

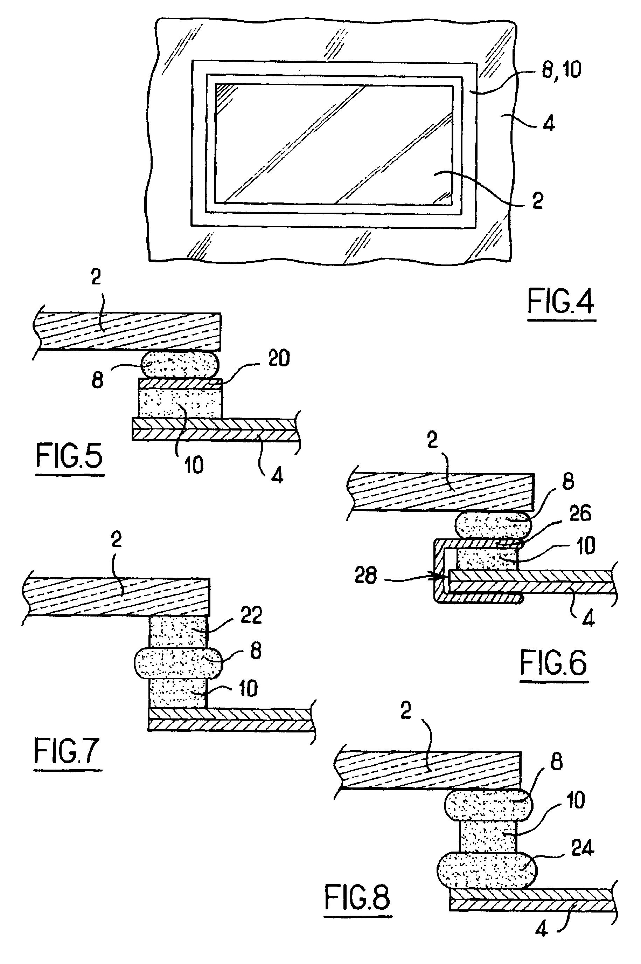

En référence à la figure 4, on pourra prévoir dans un autre mode de réalisation que la superposition des deux couches 8 et 10 a lieu sur tout le périmètre du pare-brise pour former un cordon continu en boucle, à deux épaisseurs. Cet agencement a pour avantage d'améliorer l'étanchéité entre le pare-brise et la carrosserie et permet éventuellement de se dispenser d'un joint d'étanchéité spécifique à cet effet.

Dans un autre mode de réalisation illustré à la figure 5, on interpose entre les couches 8 et 10 un film ou une feuille, en matière plastique ou en métal par exemple. Ce film 20 a pour fonction de renforcer l'adhérence entre les couches 8 et 10 et d'amplifier le cisaillement du matériau visco-élastique 10.

Dans l'agencement prévu à la figure 6, on utilise en guise de feuille 20 un fileur ou pince 26 dont une partie s'étend entre les couches 8 et 10 et qui vient recouvrir le chant 28 des pièces formant la carrosserie pour être fixé par son bord opposé à une face de ces pièces opposée à la couche 10.

Comme le montrent les modes de réalisation des figures 7 et 8, on peut envisager d'augmenter le nombre de couches superposées. Ainsi, dans le mode de réalisation de la figure 7, une couche de matériau visco-élastique supplémentaire 22 est interposée entre la face supérieure de la couche de colle 8 et la face inférieure du pare-brise. La couche de colle 8 se trouve donc interposée entre deux couches de matériau visco-élastique. A l'inverse, dans le mode de réalisation prévu à la figure 8, c'est une couche de colle supplémentaire 24 qui est prévue entre la face inférieure de la couche 10 du matériau visco-élastique et la carrosserie, de sorte que la couche 10 de matériau visco-élastique est interposée cette fois entre deux couches de colle. On pourra prévoir d'augmenter encore le nombre de couches superposées.

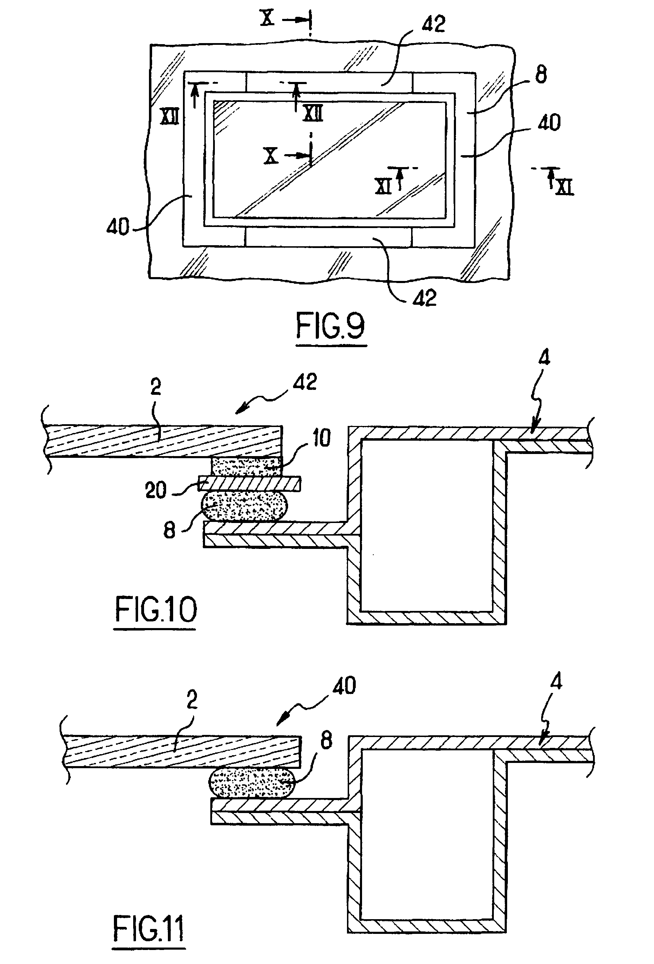

Dans le mode de réalisation de la figure 9, la fixation du pare-brise 2 à la carrosserie 4 s'effectue de deux façons différentes correspondant respectivement aux zones 40 et 42. Les premières zones 40 correspondent sensiblement dans le présent exemple aux côtés latéraux gauche et droit du pare-brise en recouvrant légèrement les côtés longitudinaux inférieur et supérieur. Les deuxièmes zones 42 correspondent à la plus grande partie des côtés supérieur et inférieur. On a illustré à la figure 11 en coupe la structure des zones 40. Dans celles-ci, le pare-brise est fixé à la carrosserie au moyen de la seule couche de colle 8 qui se trouve donc en contact direct avec la face inférieure du pare-brise et la carrosserie. Dans les deuxièmes zones 42 comme illustré à la figure 10, le pare-brise est fixé à la carrosserie au moyen d'un agencement semblable à celui déjà décrit en référence à la figure 5 bien que le matériau visco-élastique se trouve cette fois au-dessus de la colle 8.

A nouveau, le matériau visco-élastique permet d'absorber l'énergie vibratoire transmise entre la carrosserie et le pare-brise pour assurer une bonne performance anti-bruit. Néanmoins, comme il n'assure pas nécessairement un collage de bonne qualité de la vitre à la carrosserie, notamment en raison du manque de planéité des feuillures supportant le pare-brise, il est préférable de lui superposer en complément la colle classique, éventuellement sous une épaisseur plus faible que de façon habituelle. La feuille de séparation assure une adhérence suffisante à l'interface entre le matériau visco-élastique et cette colle. Dans le cas où le matériau visco-élastique est compatible avec une adhérence convenable à l'interface, cette feuille de séparation ne sera pas nécessaire. Dans les zones 42, la colle a notamment pour rôle de rattraper les irrégularités géométriques de la carrosserie pour assurer un collage et une étanchéité conformes aux préconisations. Afin d'absorber le maximum d'énergie vibratoire transmise entre la carrosserie et le pare-brise, il sera préférable que le matériau visco-élastique ait un facteur de perte important et un module de cisaillement faible dans la bande de fréquences concernée. On peut utiliser les valeurs suivantes comme valeurs de référence :
- plage de température : de 10°C à 40°C ;
- fréquence : de 20 à 500 Hz ;
- facteur de perte : supérieur à 0,7 ; et
- module élastique de cisaillement : inférieur à 3 MPa (10⁶ N / m²).

A titre d'exemple, les mousses acryliques sont des matériaux qui peuvent satisfaire à ces exigences.

Outre la performance acoustique, le matériau visco-élastique doit respecter le critère de tenue mécanique en cas de choc. On sait notamment qu'en cas de choc frontal, les airbags conducteur et passager se déploient et exercent une force importante sur le bas du pare-brise. Afin d'assurer la tenue mécanique du pare-brise en cas de choc, le matériau visco-élastique devra de préférence respecter le cahier des charges sur la contrainte de rupture supérieure à 3 Mpa. En effet, le temps de déploiement d'un airbag est de l'ordre de quelques dixièmes de seconde avec une déformation du matériau élastique de l'ordre du millimètre. La vitesse du choc est donc équivalente à une fréquence vibratoire supérieure à 1000 Hz. Grâce à sa viscosité importante, le matériau visco-élastique possède une très forte résistance à la déformation rapide. Par exemple, pour le matériau vendu sous le nom Scotchdamp SJ-2015X Visco-élastique Polymère, à 20°C, le module est de 20 Mpa et il est supérieur à 5 Mpa à 1000 Hz. Par conséquent, ce type de matériau satisfait à la fois les exigences vibratoires et celles de la sécurité passive.

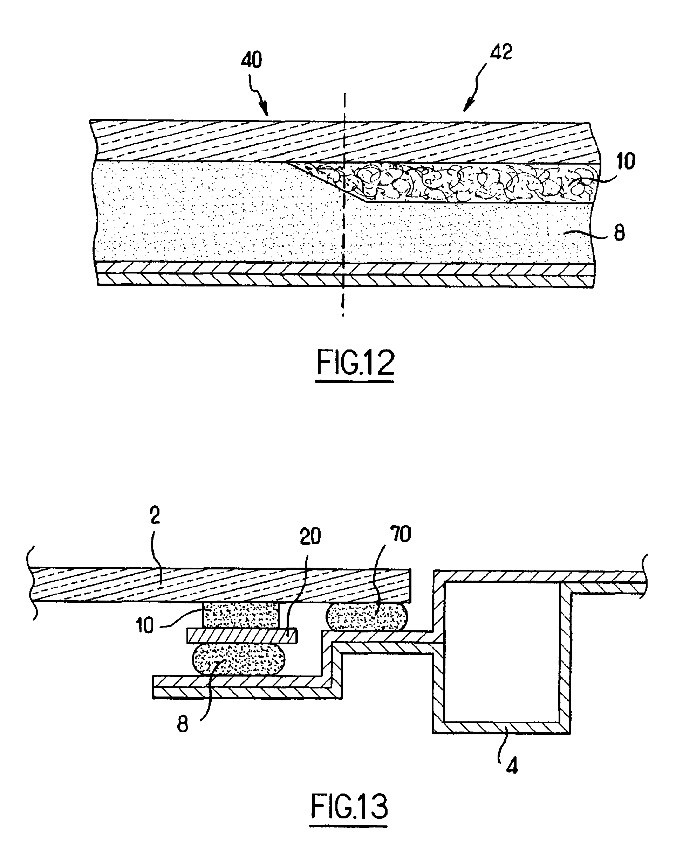

Pour assurer une étanchéité convenable au pare-brise, il sera préférable d'éviter une discontinuité brutale aux jonctions entre les zones 40 et 42. Il est pour cela possible de réaliser une jonction comme illustré à la figure 12. On observe sur celle-ci que la couche de colle 8 voit son épaisseur augmenter progressivement à mesure que diminue l'épaisseur de la couche du matériau visco-élastique 10 et ce, suivant une progression linéaire à la frontière entre les zones 40 et 42.

On pourra prévoir que le dispositif de pressage utilisé pour la pose du matériau visco-élastique conforme le produit pour que son extrémité ait une forme amincie s'approchant de celle de la figure 12. Cependant, dans le cas où cet amincissement du matériau ne serait pas suffisant, on pourra prévoir un excès de colle à l'endroit du raccord avec l'autre matériau. Cet excès pourra être obtenu par un ralentissement du dispositif de dépose de la colle qui en déposera une quantité majorée afin de garantir l'étanchéité dans cette zone délicate. Dans le mode de réalisation de la figure 12, on pourra prévoir que la colle est du type DOW HV3.

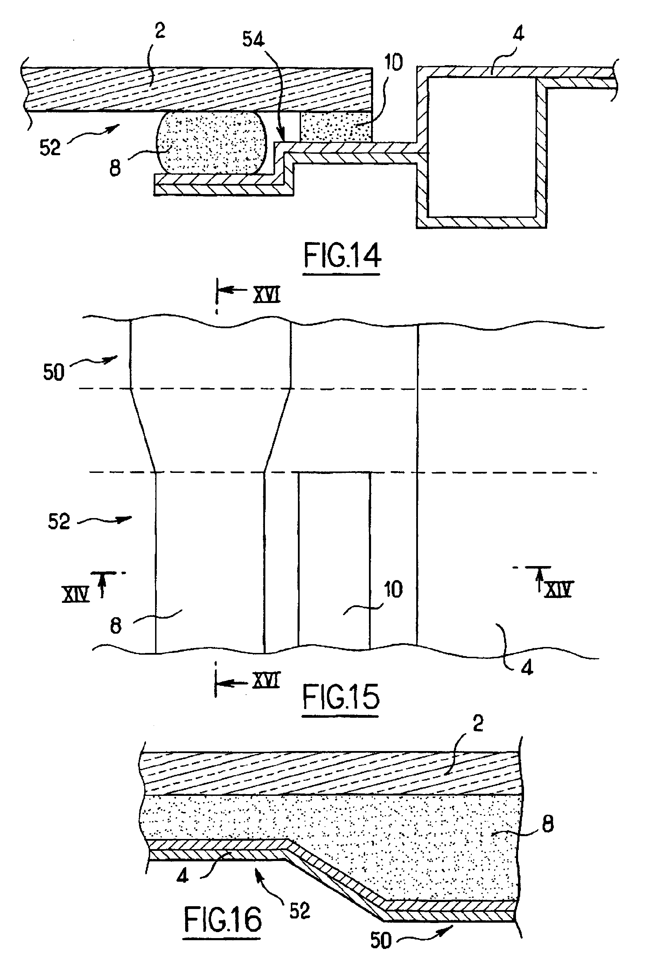

Un autre mode de réalisation a été décrit aux figures 14 à 16. Cette fois, dans certaines zones 52 (correspondant par exemple aux zones 42), le pare-brise 2 est fixé à la carrosserie 4 au moyen de la colle 8 et du matériau visco-élastique 10 tandis que, dans les autres zones 50, il y est fixé uniquement au moyen de la colle. Contrairement au mode de réalisation de la figure 9, dans les zones 52, les deux couches 8 et 10 sont cette fois juxtaposées et distantes l'une de l'autre. Elles sont disposées l'une à côté de l'autre en contact chacune avec la face inférieure du pare-brise. Elles sont d'autre part chacune en contact avec la carrosserie, un épaulement 54 pouvant être prévu au niveau de la feuillure pour tenir compte du fait que l'épaisseur de la couche du matériau visco-élastique 10 est inférieur à l'épaisseur de la couche de colle 8. Cette solution permet de réaliser une ceinture de colle continue sur toute la périphérie du pare-brise. Comme le module de cisaillement de la colle est plus élevé que celui du matériau visco-élastique, il est préférable d'augmenter l'épaisseur de la couche de colle et d'en diminuer la largeur dans les zones 52 par comparaison aux zones 50 pour préserver l'efficacité du matériau visco-élastique. Les épaisseurs et largeurs des couches de colle et de matériau visco-élastique sont déterminées par des calculs permettant de maximiser l'énergie de déformation en cisaillement du matériau visco-élastique. Ainsi, dans la ou chaque zone 52, la ligne de collage est moins large et plus épaisse. Le robot qui effectue le collage du pare-brise dans la chaîne de montage peut donc garder la même vitesse et le même débit de distribution de colle, ce qui simplifie le procédé de montage.

Dans un autre mode de réalisation, on pourra remplacer le joint 12 de la figure 2 par un joint d'étanchéité permettant d'assurer une étanchéité entre le pare-brise et la carrosserie quel que soit l'agencement retenu pour les couches de colle et de matériau visco-élastique. Un tel agencement permet non seulement de simplifier la jonction entre les deux zones 50 et 52 mais également de laisser plus de liberté pour l'optimisation du dispositif d'amortissement et améliorer sa performance.

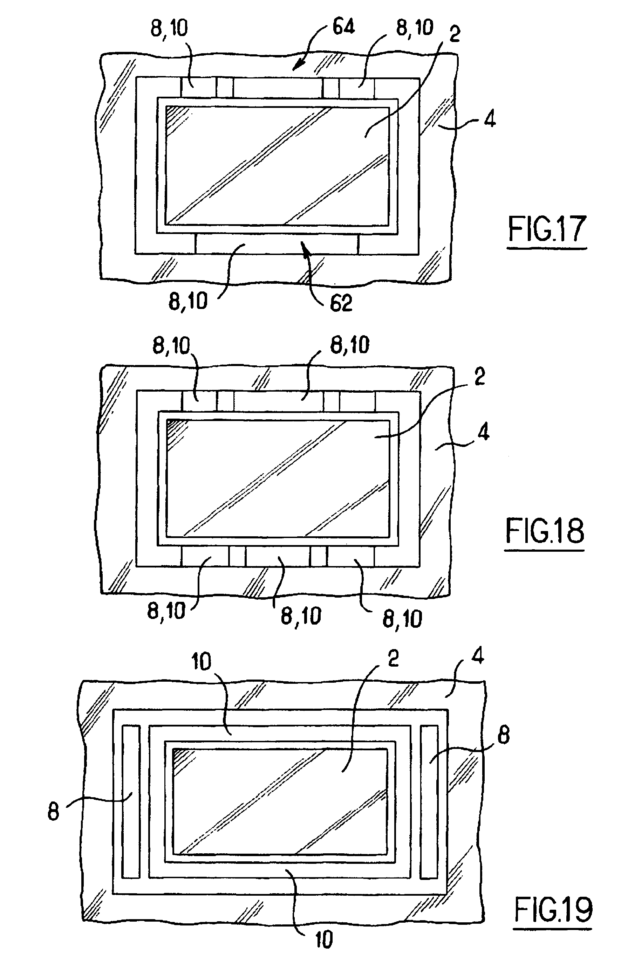

Par exemple, on pourra prévoir des modes de réalisation tels que ceux illustrés aux figures 17 et 18. A la figure 17, le côté longitudinal inférieur du pare-brise est constitué par une zone 62 dans laquelle les couches sont continues et présentent l'agencement de la figure 5 alors qu'elles sont discontinues le long du côté longitudinal supérieur 64 du pare-brise avec le même agencement. Les côtés latéraux gauche et droit du pare-brise sont exempts de couches.

Dans le mode de réalisation de la figure 18, ce sont les deux côtés longitudinaux supérieur et inférieur du pare-brise qui sont dotés d'une double couche discontinue.

Enfin dans le mode de réalisation de la figure 19, le pare-brise est fixé à la carrosserie au moyen d'une couche visco-élastique 10 continue formant une ceinture correspondant à tout le périmètre du pare-brise. Au niveau des côtés latéraux gauche et droit, une couche de colle 8 est juxtaposée à la couche visco-élastique 10, de sorte que celle-ci est elle aussi en contact avec la carrosserie et le pare-brise. Un espace est ménagé entre la couche de matériau visco-élastique et la couche de colle. Afin d'assurer une bonne performance acousitique, on prévoira que le module du matériau visco-élastique est relativement faible. C'est pourquoi on pourra préserver les deux bandes de colle habituelles avec un module élastique élevé supérieur à 20 Mpa. Lors de la torsion de la caisse, c'est la colle au niveau des montants latéraux qui subit le plus haut niveau d'effort. C'est la raison pour laquelle on prévoit cet agencement pour la disposition de la colle. En résumé, la ceinture complète du matériau visco-élastique assure la performance acoustique et l'étanchéité tandis que la colle habituelle restreinte aux deux côtés latéraux assure la tenue mécanique.

De façon générale, avant la pose du matériau visco-élastique, il sera avantageux de préparer la vitre sur l'ensemble de son périmètre de collage par l'application d'un primaire de façon connue en soi. Le matériau visco-élastique est protégé sur une face par un protecteur anti-adhérent et est enroulé sur lui-même en se présentant sous forme de rouleau. Un dispositif assurant le rôle de dévidoir et de pelage du protecteur est utilisé pour la mise en place du produit sur les zones décrites plus haut de la piste d'encollage de la vitre et / ou de la carrosserie. L'accostage du visco-élastique est assuré en même temps que la pose par l'action d'un galet presseur dont l'effort sera taré en fonction des préconisations propres au matériau visco-élastique. Typiquement, la colle est appliquée après le visco-élastique

Si le matériau visco-élastique n'est pas compatible avec la colle à vitrage, on pourra prévoir comme précité une feuille, par exemple sous la forme d'un matériau PET d'épaisseur d'environ 10 micromètres. Cette feuille pourra être traitée pour avoir une bonne aptitude au collage vis-à-vis de la colle à vitrage. Ce traitement pourra être réalisé par un primaire d'adhérence comme par exemple le beta prime 5404 de DOW.

La colle pour la mise en place du vitrage est déposée sur l'ensemble de la piste de collage en respectant la hauteur totale spécifiée, que ce soit dans les zones où est présent le matériau visco-élastique ou en-dehors de ces zones. La modulation de la quantité de colle en fonction de la zone sera obtenue par une variation de vitesse du robot d'encollage, par exemple.

L'invention dans ses différents modes de réalisation permet de réduire l'amplitude des vibrations du pare-brise en introduisant de l'amortissement grâce à une géométrie et un procédé particulièrement avantageux ainsi qu'une fixation qui amplifie et concentre l'énergie incidente pour mieux la dissiper. La colle corrige les dispersions de fabrication et les irrégularités de surface lors de la fixation.

Il est à remarquer qu'aux figures 1 à 10, 12, 17 et 18, la couche de visco-élastique, par exemple sous forme de bande adhérent sur les deux faces, est en série de la couche de colle. Aux figures 19, 14 et 15, la couche de visco-élastique est en parallèle de la couche de colle. Dans ce cas, le visco élastique est par exemple appliqué sous forme d'un pâteux pour plus de facilité de compensation des irrégularités de surface. A la figure 13, l'application des couches est une combinaison d'application série et parallèle.

Bien entendu, on pourra apporter à l'invention de nombreuses modifications sans sortir du cadre de celle-ci.

On pourra prévoir, comme illustré à la figure 13, qu'une couche de colle 70 (ou de matériau visco-élastique) est juxtaposée à deux couches superposées de colle 8 et de matériaux visco-élastique 10, et ce au moins dans certaines zones du périmètre du pare-brise.

## Revendications

1. Véhicule comprenant au moins une vitre (2), une carrosserie (4), au moins une couche de matériau visco-élastique (10, 22) interposée entre la vitre et la carrosserie, **caractérisé en ce que** la vitre (2) présente un périmètre dont au moins un côté est exempt de matériau visco-élastique.

2. Véhicule selon la revendication 1, **caractérisé en ce que** le matériau visco-élastique (10) s'étend de façon discontinue le long d'au moins un côté d'un périmètre de la vitre.

3. Véhicule selon l'une quelconque des revendications précédentes, **caractérisé en ce qu'**il comprend en outre au moins une couche de colle (8, 24, 70) interposée entre la vitre et la carrosserie.

4. Véhicule selon la revendication précédente, **caractérisé en ce qu'**il comprend au moins une zone dans laquelle la couche de colle (8, 24) et la couche de matériau visco-élastique (10, 22) sont superposées.

5. Véhicule selon l'une quelconque des revendications 3 ou 4, **caractérisé en ce qu'**il comprend au moins une zone dans laquelle la couche de colle (8) et la couche de matériau visco-élastique (10) sont superposées, cette zone comprenant en outre une couche de colle (70) ou de matériau visco-élastique juxtaposée aux couches superposées.

6. Véhicule selon l'une quelconque des revendications 4 ou 5, **caractérisé en ce qu'**il comprend un film (20, 26) interposé entre les couches superposées.

7. Véhicule selon l'une quelconque des revendications précédentes, **caractérisé en ce qu'**il comprend au moins une zone dans laquelle la couche de matériau visco-élastique (10) et une couche de colle (70, 8) sont juxtaposées.

8. Véhicule selon l'une quelconque des revendications précédentes, **caractérisé en ce que** le matériau visco-élastique présente les caractéristiques suivantes :
- un facteur de perte supérieur ou égal à 0,7 ; et
- un module élastique de cisaillement inférieur ou égal à 3 MPa, dans une plage de température de 10 à 40°C et sous une excitation vibratoire comprise entre 20 et 500 Hz.

9. Procédé de fixation d'au moins une vitre à carrosserie de véhicule, dans lequel on interpose une couche de matériau visco-élastique (10) entre 1 a vitre (2) et la carrosserie (4) de façon à ce que la vitre (2) présente un périmètre dont au moins un côté est exempt de matériau visco-élastique.

## Patentansprüche

1. Fahrzeug, das mindestens eine Scheibe (2), eine Karosserie (4), mindestens eine Schicht aus viskoelastischem Material (10, 22), die zwischen die Scheibe und die Karosserie eingefügt ist, aufweist, **dadurch gekennzeichnet, dass** die Scheibe (2) einen Umfang aufweist, von dem mindestens eine Seite kein viskoelastisches Material aufweist.

2. Fahrzeug nach Anspruch 1, **dadurch gekennzeichnet, dass** sich das viskoelastische Material (10) unterbrochen entlang mindestens einer Seite eines Umfangs der Scheibe erstreckt.

3. Fahrzeug nach einem der vorhergehenden Ansprüche, **dadurch gekennzeichnet, dass** es ferner mindestens eine Klebstoffschicht (8, 24, 70) aufweist, die zwischen die Scheibe und die Karosserie eingefügt ist.

4. Fahrzeug nach dem vorhergehenden Anspruch, **dadurch gekennzeichnet, dass** es mindestens einen Bereich aufweist, in dem die Klebstoffschicht (8, 24) und die Schicht aus viskoelastischem Material (10, 22) überlagert sind.

5. Fahrzeug nach einem der Ansprüche 3 oder 4, **dadurch gekennzeichnet, dass** es mindestens einen Bereich aufweist, in dem die Klebstoffschicht (8) und die Schicht aus viskoelastischem Material (10) überlagert sind, wobei dieser Bereich ferner eine Klebstoffschicht (70) oder Schicht aus viskoelastischem Material neben den überlagerten Schichten aufweist.

6. Fahrzeug nach einem der Ansprüche 4 oder 5, **dadurch gekennzeichnet, dass** es eine Folie (20, 26) aufweist, die zwischen die überlagerten Schichten eingefügt ist.

7. Fahrzeug nach einem der vorhergehenden Ansprüche, **dadurch gekennzeichnet, dass** es wenigstens einen Bereich aufweist, in dem die Schicht aus viskoelastischem Material (10) und eine Klebstoffschicht (70, 8) nebeneinander liegen.

8. Fahrzeug nach einem der vorhergehenden Ansprüche, **dadurch gekennzeichnet, dass** das viskoelastische Material die folgenden Merkmale aufweist:
- einen Verlustfaktor größer oder gleich 0,7, und
- ein Elastizitätsmodul kleiner oder gleich 3 MPa in einem Temperaturbereich von 10 bis 40 °C und unter einer Schwingungserregung zwischen 20 und 500 Hz.

9. Verfahren zum Befestigen mindestens einer Scheibe an einer Fahrzeugkarosserie, bei dem man eine Schicht aus viskoelastischem Material (10) zwischen die Scheibe (2) und die Karosserie (4) derart einfügt, dass die Scheibe (2) einen Umfang aufweist, von dem mindestens eine Seite kein viskoelastisches Material aufweist.

## Claims

1. A vehicle comprising at least one glass pane (2), a bodywork (4), at least one layer of viscoelastic material (10, 22) interposed between the glass pane and the bodywork, wherein the glass pane (2) has on its perimeter at least one side without viscoelastic material.

2. The vehicle according to claim 1, wherein the viscoelastic material (10) extends discontinuously along at least one side of the perimeter of the glass pane.

3. The vehicle according to any one of the preceding claims, comprising in addition at least an adhesive layer (8, 24, 70) placed between the glass pane and the bodywork.

4. The vehicle according to claim 3, comprising at least one area inside which the adhesive layer (8, 24) and the viscoelastic material (10, 22) are superposed.

5. The vehicle according to claim 3 or 4, comprising at least one area inside which the adhesive layer (8) and the viscoelastic material (10) are superposed, this area comprising in addition an adhesive layer (70) or viscoelastic material juxtaposed to the superposed layers.

6. The vehicle according to claim 4 or 5, further comprising a film (20, 26) interposed between the superposed layers.

7. The vehicle according to any one of the preceding claims, comprising at least one area inside which the viscoelastic material layer (10) and an adhesive layer (70, 8) are juxtaposed.

8. The vehicle according to any one of the preceding claims, wherein the viscoelastic material has the following characteristics:
- A loss factor greater than or equal to 0.7; and
- An elastic shear modulus less than or equal to 3 MPa, in a temperature range from 10 to 40°C and under a vibration excitation comprised between 20 and 500 Hz.

9. Method for fixing at least one glass pane to a vehicle bodywork in which a viscoelastic material layer (10) is interposed between the glass pane (2) and the bodywork (4) in order to have at least one side of the glass pane (2) perimeter without viscoelastic material.
